# EUROPÄISCHE PATENTSCHRIFT

(11) **EP 2 170 512 B1**
(45) Veröffentlichungstag und Bekanntmachung des Hinweises auf die Patenterteilung: **08.02.2012**
(21) Anmeldenummer: 08773912.4
(22) Anmeldetag: 08.07.2008
(51) Int. Cl.: B01J 49/00, C01B 7/07

(54) **REGENERATION EINES MIT HEXACHLOROSTANNAT BELADENEN ANIONENAUSTAUSCHERS**
REGENERATION OF A HEXACHLOROSTANNATE-LOADED ANION EXCHANGER
RÉGÉNÉRATION D'UN ÉCHANGEUR ANIONIQUE CHARGÉ D'HEXACHLOROSTANNATE

(30) Priorität: 19.07.2007 DE 102007033524
(43) Veröffentlichungstag der Anmeldung: 07.04.2010
(73) Patentinhaber: Bayer MaterialScience AG, 51368 Leverkusen (DE)
(72) Erfinder: ERWE, Torsten, 51519 Odenthal (DE); WERNER, Knud, 47800 Krefeld (DE); WEISSENBERG, Dirk, 51377 Leverkusen (DE)
(86) Internationale Anmeldenummer: PCT/EP2008/005544
(87) Internationale Veröffentlichungsnummer: WO 2009/010209

(56) Entgegenhaltungen:
- D. JENTZSCH, I. FROTSCHER: "Anwendung von Ionenaustauschern in der analytischen Chemie. II. Mitteilung. Adsorptionsverhalten von Elementen an einem Anionenaustauscher in salzsaurer Lösung" FRESENIUS JOURNAL OF ANALYTICAL CHEMISTRY, [Online] Bd. 144, Nr. 1, 1955, Seiten 17-25, XP002499175 Gefunden im Internet: URL:http://www.springerlink.com/content/x7 555wr835535424/fulltext.pdf> [gefunden am 2008-10-08]
- ANONYMOUS: "Lewatit-Selective ion exchangers Instructions for laboratory trilas with Lewatit selective exchange resinsTechnical Information" INTERNET ARTICLE, [Online] 5. Juli 1997 (1997-07-05), Seiten 1-8, XP002499183 Gefunden im Internet: URL:http://www.sybronchemicals.com/service /pdf/Labnotes.pdf> [gefunden am 2008-10-09]

## Beschreibung

Gegenstand der Erfindung ist ein Verfahren zur Regeneration von Anionenaustauschern, die mit Hexachlorostannat beladen sind.

Konzentrierte Salzsäure mit einer Konzentration größer als 10 Massenprozent ist oftmals durch Schwermetalle verunreinigt, die vor einer Weiterverwendung der Säure entfernt werden müssen.

In der Literatur werden diese Schwermetalle mittels Anionenaustauscher entfernt, da die Schwermetalle größtenteils als Chloro-Komplexe vorliegen. Die beladenen Ionenaustauscher werden dann mittels Wasser oder Basen regeneriert. Dabei werden die Schwermetallanionen durch Hydroxidionen ersetzt und aus dem Ionenaustauscher entfernt.

Im Fall von Sn(IV) als Schwermetall liegt das Zinn als Hexachlorostannat-Komplex vor, der nur bei hohen Salzsäurekonzentrationen stabil ist. Eine Regeneration der beladenen Ionenaustauscher ist mittels Wasser nicht möglich, da das Zinn schwerlösliches Zinnhydroxid bildet, das in dem Ionenaustauscher ausfällt.

In Fresenius Journal of Analytical Chemistry, Bd. 144, Nr. 1, 1955, Seiten 17-25 wird offenbart dass der im Anionenaustauscher beladene Hexachlorokomplex SnCl₆²⁻ durch HCl Lösungen mit einer Konzentration unter 1.5 m (als Molarität) eluiert werden kann und der Anionenaustauscher entsprechend regeneriert wird.

Das Merkblatt der Bayer AG "Lewatit-Selective ion exchangers Instructions for laboratory trials with Lewatit selective exchange resins" (Technical Information), Edition 05.07.97, offenbart einen allgemeinen Prozess zur Regeneration von Anionenaustauschern mittels reine Salzsäure Lösungen mit einer Konzentration von 7.5 %.

Der Ionenaustauscher kann mit verdünnter Natronlauge (Konzentration etwa 1 bis 15 Massenprozent) regeneriert werden. Das Sn(IV) wird in einen löslichen Hexahydroxystannat-Komplex überführt. Bei Regeneration mit Natronlauge wird jedoch eine große Menge an Neutralisationswärme freigesetzt. Zudem muss eine große Menge an Frischwasser zum Spülen des Ionenaustauschers eingesetzt werden.

Es bestand Bedarf für ein Verfahren zur Regeneration von mit Hexachlorostannat beladenen Anionenaustauschern, bei dem es nicht zu Ausfällungen im Ionenaustauscher kommt und bei dem keine großen Wärmemengen abgeführt werden müssen.

Gegenstand der Erfindung ist ein Verfahren zur Regeneration von Anionenaustauschern, die mit Hexachlorostannat beladen sind, in dem als Regenerationsmittel eine 1 bis 10 Massenprozent HCl enthaltende Salzsäure eingesetzt wird. Das Regenerationsmittel, Sn(IV) enthaltende verdünnte Salzsäure wird hergestellt durch Verdünnung der, zur Beladung des Anionenaustauschers eingesetzten mit Sn(IV) verunreinigten konzentrierten Salzsäure, mit Wasser.

>

Überraschenderweise gelingt die Regeneration des beladenen Ionenaustauschers aber auch mit der mit Sn(IV) verunreinigten Salsäure, wenn diese mit Wasser auf eine Konzentration von 1 bis 10 Massenprozent HCl verdünnt wird.

Dies ermöglicht eine besonders effiziente Prozessführung. Die mit Sn(IV) verunreinigte konzentrierte Salzsäure wird zur Reinigung über den Anionenaustauscher geleitet. Wenn dieser regeneriert werden muss, wird die mit Sn(IV) verunreinigte konzentrierte Salzsäure mit Wasser auf eine Konzentration von 1 bis 10 Massenprozent HCl verdünnt und durch den Anionentauscher geleitet, um das dort als Hexachlorostannat gebundene Sn(IV) zu eluieren und den Anionenaustauscher zu regenerieren. Wenn der Anionenaustauscher ausreichend regeneriert ist, kann wieder auf die mit Sn(IV) verunreinigte konzentrierte Salzsäure umgestellt werden und die Reinigung der mit Sn(IV) verunreinigten konzentrierten Salzsäure kann wieder aufgenommen werden.

### Beispiel:

Die Beladung des Anionenaustauschers wurde mit einer Modelllösung durchgeführt, die aus Zinntetrachlorid (SnCl₄) und Salzsäure mit einer Konzentration von 32 Massenprozent hergestellt wurden. Die Zinnkonzentration der Modelllösung betrug etwa 100 mg/l. Der Massenanteil (w) der Salzsäure lag im Bereich zwischen 30 und 32%.

Als Anionenaustauscher wurde ein stark basisches Anionentauscherharz (Lewatit^{®} M 500, Lanxess Deutschland GmbH) verwendet.

Der Ionenaustauscher wurde in einer temperierten Kolonne unter folgenden Bedingungen beladen und auch anschließend regeneriert:

| | |
|---|---|
| Säulendurchmesser: | 16,4 mm |
| Betthöhe: | 51 cm |
| Bettvolumen: | 108 ml |
| IAT-Menge: | 67,9 g |
| Temperatur: | 22°C |
| Durchsatz: | 990ml/h |
| Filtergeschwindigkeit: | 4,7 m/h |

Der Ionenaustauscher wurde im Versuch mit 56,8 mg Sn/g M 500 (38,1 g/l M 500) bzw. 0,62 eq/l beladen.

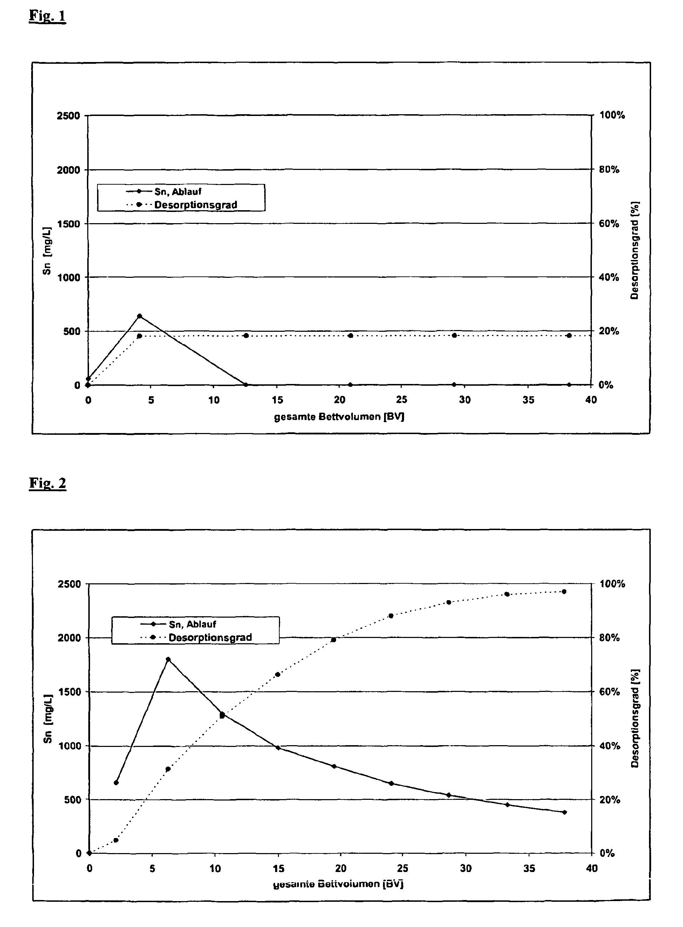

Beim Versuch, den Ionenaustauscher mit VE-Wasser zur regenerieren, zeigte sich, dass lediglich zu Beginn der Regeneration Zinn aus dem Ionenaustauscher entfernt wurde. Zu Beginn der Regeneration wurde die sich noch in der Säule befindliche Salzsäure auf geringere Konzentrationen verdünnt, und diese führte zu einer anfänglichen Regeneration (siehe Abbildung 1). Dies wurde auch deutlich bei Betrachtung der pH-Werte im Ablauf der Kolonne. Zu Beginn der Regeneration lag dieser nach unter 0. Nachdem dieser auf über 1 gestiegen war konnte auch keine Regeneration mehr nachgewiesen werden.

Ein weiterer beladener Ionenaustauscher wurde mit Salzsäure mit einer Konzentration von 1,5 Massenprozent regeneriert. Dabei konnte der Ionenaustauscher nahezu vollständig regeneriert werden (siehe Abbildung 2).

## Patentansprüche

1. Verfahren zur Regeneration von Anionenaustauschern, die mit Hexachlorostannat beladen sind, in dem als Regenerationsmittel eine 1 bis 10 Massenprozent HCl enthaltende Salzsäure eingesetzt wird, **dadurch gekennzeichnet, dass** das Regenerationsmittel Sn(IV) enthaltende verdünnte Salzsäure ist.

2. Verfahren gemäß Anspruch 1, bei dem die Sn(IV) enthaltende verdünnte Salzsäure durch Verdünnung der zur Beladung des Anionenaustauschers eingesetzten Sn(IV) enthaltenden konzentrierten Salzsäure mit Wasser hergestellt wird.

## Claims

1. Process for regeneration of anion exchangers loaded with hexachlorostannate by using as regenerant a hydrochloric acid containing 1 to 10 mass per cent of HCl, **characterized in that** the regenerant is Sn(IV)-containing dilute hydrochloric acid.

2. Process according to Claim 1, wherein the Sn(IV)-containing dilute hydrochloric acid is prepared by diluting with water the Sn(IV)-containing concentrated hydrochloric acid used for loading the anion exchanger.

## Revendications

1. Procédé pour la régénération d'échangeurs anioniques, chargés d'hexachlorostannate, dans lequel on utilise comme agent de régénération un acide chlorhydrique contenant 1 à 10% en masse de HCl, **caractérisé en ce que** l'agent de régénération est de l'acide chlorhydrique dilué contenant Sn (IV).

2. Procédé selon la revendication 1, dans lequel l'acide chlorhydrique dilué contenant Sn (IV) est préparé par dilution de l'acide chlorhydrique concentré contenant Sn (IV) pour charger l'échangeur anionique avec de l'eau.
